(19) Europäisches Patentamt
European Patent Office
Office européen des brevets

(11) Veröffentlichungsnummer : **0 443 163 B1**

# (12) EUROPÄISCHE PATENTSCHRIFT

(45) Veröffentlichungstag der Patentschrift : **23.03.94 Patentblatt 94/12**

(51) Int. Cl.$^5$ : **C09B 62/20,** D06P 1/382

(21) Anmeldenummer : **90124691.8**

(22) Anmeldetag : **19.12.90**

## (54) Formazanfarbstoffe.

Die Akte enthält technische Angaben, die nach dem Eingang der Anmeldung eingereicht wurden und die nicht in dieser Patentschrift enthalten sind.

(30) Priorität : **17.02.90 DE 4005122**

(43) Veröffentlichungstag der Anmeldung : **28.08.91 Patentblatt 91/35**

(45) Bekanntmachung des Hinweises auf die Patenterteilung : **23.03.94 Patentblatt 94/12**

(84) Benannte Vertragsstaaten : **CH DE FR GB LI**

(56) Entgegenhaltungen :
**EP-A- 0 338 310**
**DE-A- 3 718 397**
**US-A- 4 007 164**

(73) Patentinhaber : **BAYER AG**
**D-51368 Leverkusen (DE)**

(72) Erfinder : **Eizenhöfer, Thomas, Dr.**
**Am Burggraben 6**
**W-5300 Bonn 1 (DE)**
Erfinder : **Herd, Karl-Josef, Dr.**
**Am Gartenfeld 66**
**W-5068 Odenthal-Holz (DE)**
Erfinder : **Henk, Hermann, Dr.**
**Roggendorfstrasse 55**
**W-5000 Köln 80 (DE)**
Erfinder : **Brockmann, Rolf, Dr.**
**Romaney 5**
**W-5060 Bergisch Gladbach 2 (DE)**
Erfinder : **Stöhr, Frank-Michael, Dr.**
**Am Thelen Siefen 10**
**W-5068 Odenthal-Osenau (DE)**
Erfinder : **Schündehütte, Karl-Heinz, Prof. Dr.**
**Klief 75**
**W-5090 Leverkusen 3 (DE)**

**EP 0 443 163 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In DE-A 37 18 397 sind bereits Formazanreaktivfarbstoffgemische offenbart, die u.a. faserreaktive, wasserstoffreie Fluorpyrimidinyl-Reste enthalten.

Aus EP-A- 338 310 sind 8-Amino-1-oxy-naphthalinsulfonsäure-haltige Formazanreaktivfarbstoffe bekannt.

Die vorliegende Erfindung betrifft neue, schwermetallhaltige Formazanfarbstoffe der allgemeinen Formel

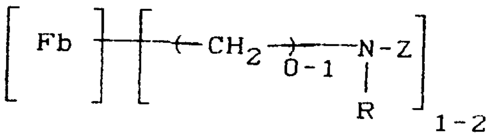

(1),

worin

Fb ein Rest der Formel

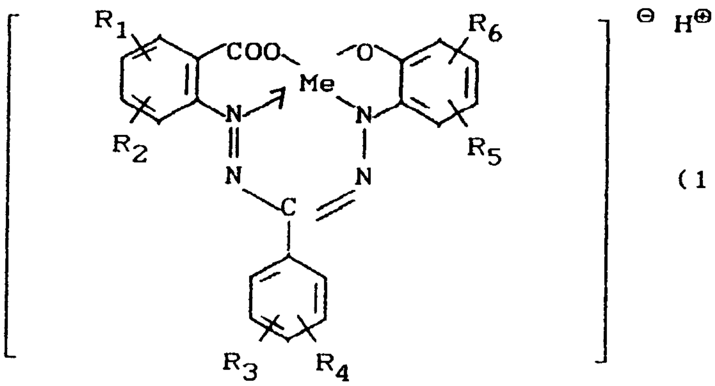

(1 a)

ist,

$R_1$ bis $R_6$ unabhängig voneinander Wasserstoff, $C_1$-$C_4$-Alkyl, $C_1$-$C_4$-Alkoxy, Hydroxy, Halogen, Carboxy, Sulfonamido, Alkyl- oder Arylcarbonylamino- oder -sulfonylamino, oder $-SO_3H$,

R Wasserstoff, $C_1$-$C_4$-Alkyl,

Z faserreaktiver Rest der Formel

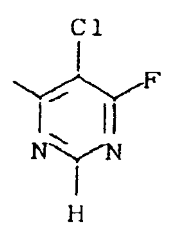

(1c)

m 0 oder 1 und

Me zweiwertiges Metallatom, beispielsweise Fe, Cu, Zn, Co, Ni, vorzugsweise Cu bedeuten.

Die Alkyl- und Arylreste können weitersubstituiert sein. Alkyl beispielsweise durch OH, $OSO_3H$, COOH, Arylreste sind insbesondere, gegebenenfalls substituiertes Phenyl (Substituenten vorzugsweise $C_1$-$C_4$-Alkyl, $C_1$-$C_4$-Alkoxy).

Geeignete Alkylcarbonylaminogruppen sind beispielsweise $C_1$-$C_4$-Alkylcarbonylaminogruppen, geeignete Arylcarbonylaminogruppen sind insbesondere gegebenenfalls substituierte Phenylcarbonylaminogruppen, geeignete Sulfonamidogruppen sind insbesondere Sulfonamid, Sulfonsäuremono- und Sulfonsäure-di-$C_1$-$C_4$-alkylamid.

Bevorzugte Farbstoffe sind solche der Formeln

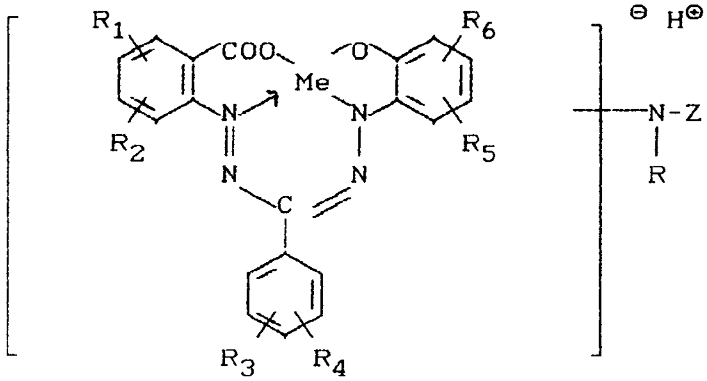

(2)

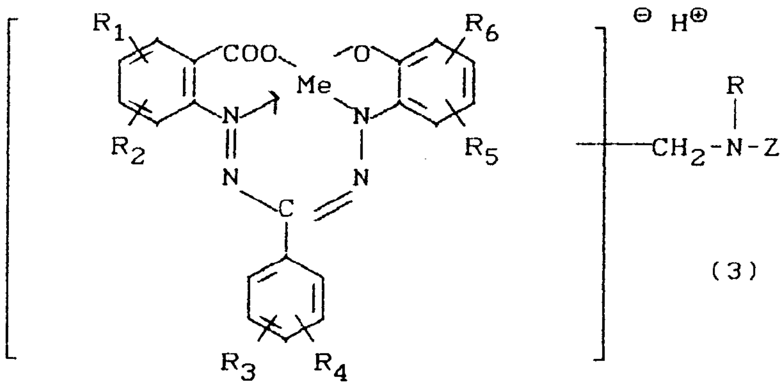

(3)

worin
$R_1$-$R_6$, R, Z und Me die oben genannte Bedeutung haben.

Besonders bevorzugt sind Farbstoffe der Formeln (6) - (11)

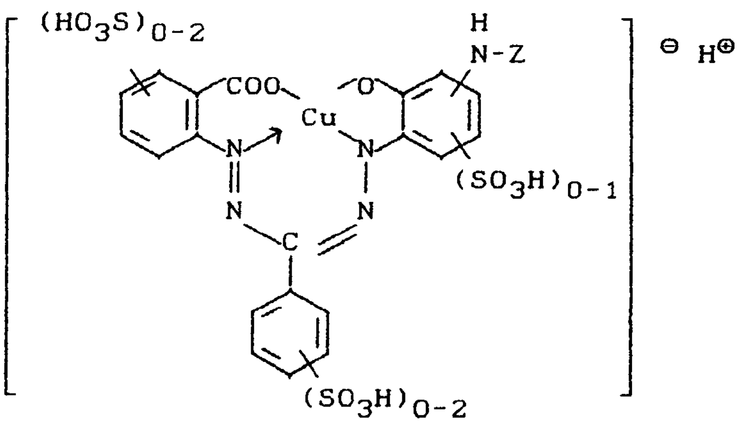

(6)

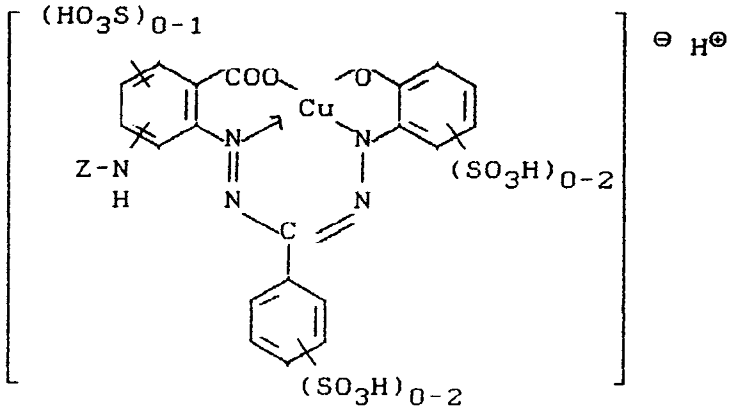

(7)

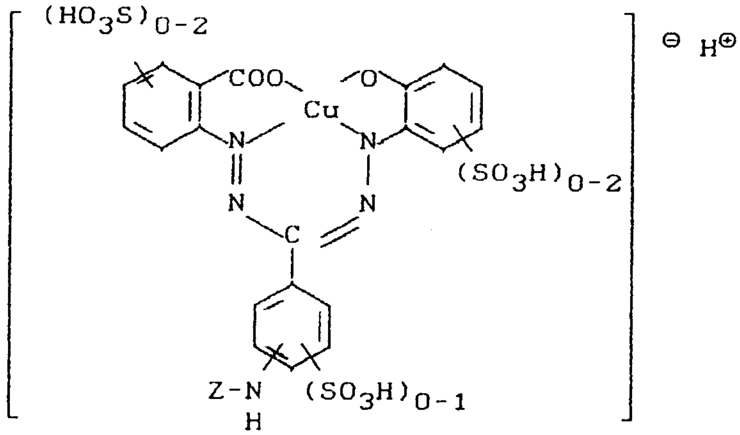

(8)

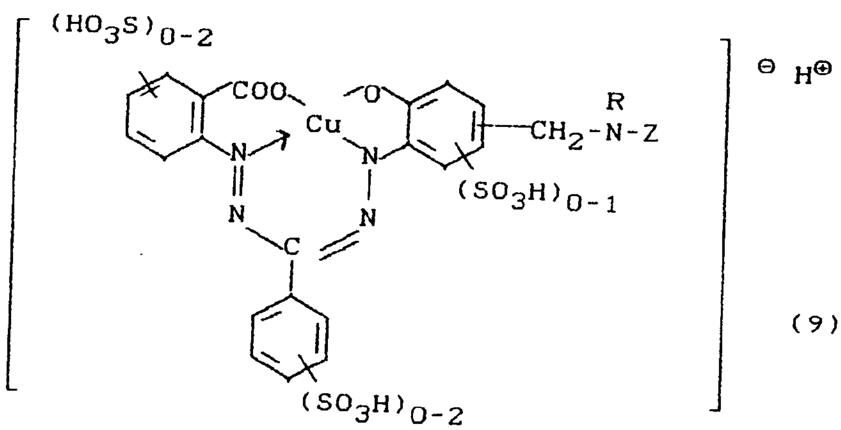

(9)

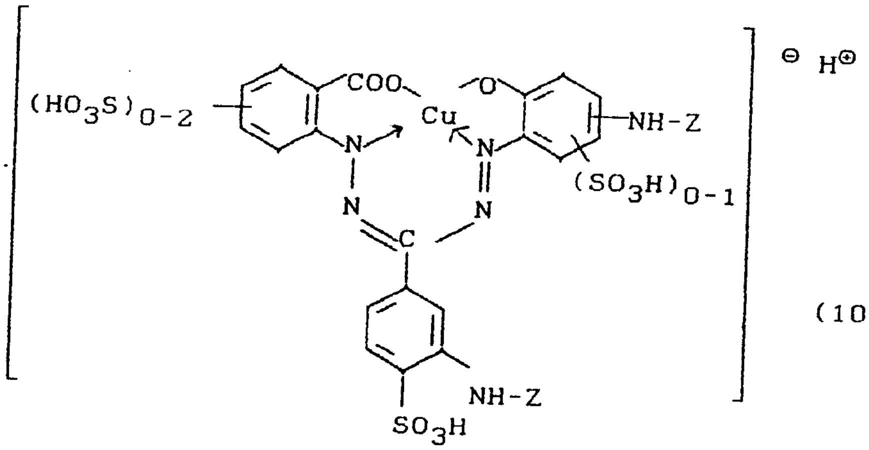

(10)

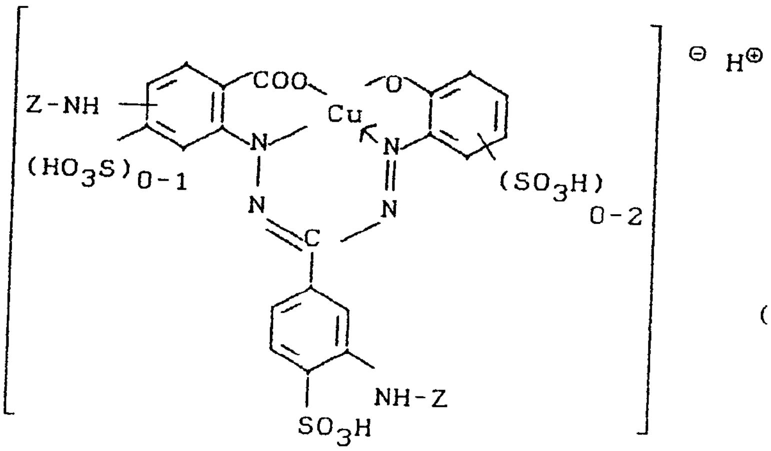

(11)

Weitere besonders bevorzugte Farbstoffe sind Farbstoffe der Formel (13a)

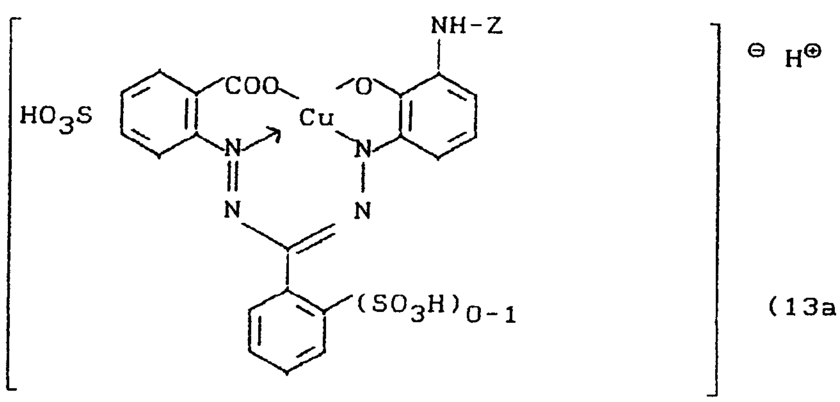

(13a)

und Mischungen von Farbstoffen (13a)

wobei Z die oben genannte Bedeutung hat.

Bevorzugt sind auch Mischungen der Formeln (6) - (11).

Zu den Farbstoffen der Formel 1 gelangt man durch Umsetzung der Farbbasen der allgemeinen Formel

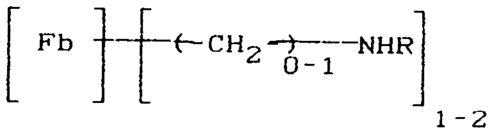 (14)

mit der Reaktivkomponente

Z - F (15)

unter Abspaltung von HF, wobei Fb, R und Z die oben genannte Bedeutung haben, nach an sich bekannten Methoden, vorzugsweise in wäßriger Lösung oder Suspension und in Gegenwart alkalischer, saurebindender Mittel, z.B. wäßrigen Alkali (Li, Na, K)-hydroxyden, -carbonaten oder -bicarbonaten.

Die Herstellung der Farbbasen ist beispielsweise beschrieben in

DE-A 2 557 141, Farbbasen der Formeln (6) - (8),
DE-A 3 239 364 A 1, Farbbasen der Formel (9),
DE-A 3 743 361, Farbbasen der Formeln (10) und (11).

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können auch als konzentrierte Lösungen eingesetzt werden.

Die erfindungsgemäßen Farbstoffe eignen sich hervorragend zum Farben und Bedrucken von natürlichen und synthetischen hydroxyl- oder amidgruppenhaltigen Materialien, insbesondere solche aus Cellulose und Polyamiden. Farbstoffgemische aus Farbstoffen der Formel (1) besitzen verbesserte Löslichkeitseigenschaften.

Sowohl die Farbstoffe als auch die Farbstoffgemische sind besonders geeignet zum Farben von Cellulosematerialien in Auszieh-, Klotz-, Kaltverweil- und Kontinueverfahren, sowie im Druck.

Man erhält bei gutem Aufbauvermögen und hohen Fixierausbeuten Färbungen mit guten Allgemeinechtheiten, insbesondere Naß- und Lichtechtheiten.

Beispiel 1

1 Mol der Farbbase (Tetranatriumsalz) der Formel

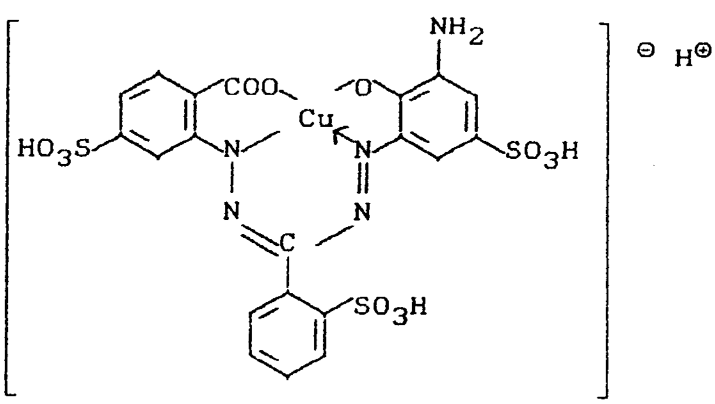

wird in 2.000 ml Wasser gelöst und bei pH 6,5 und 40-50°C mit 1,2 Mol 5-Chlor-4,6-difluorpyrimidin kondensiert.

Dabei wird der pH-Wert mit einer Alkali-bicarbonat, -carbonat oder -hydroxid-Lösung konstant gehalten.

Nach vollständiger Kondensation mit dem Pyrimidinderivat wird der Farbstoff ausgesalzen, isoliert und getrocknet.

Man erhält ein blaues Farbstoffpulver das in Form der freien Säure folgender Formel entspricht

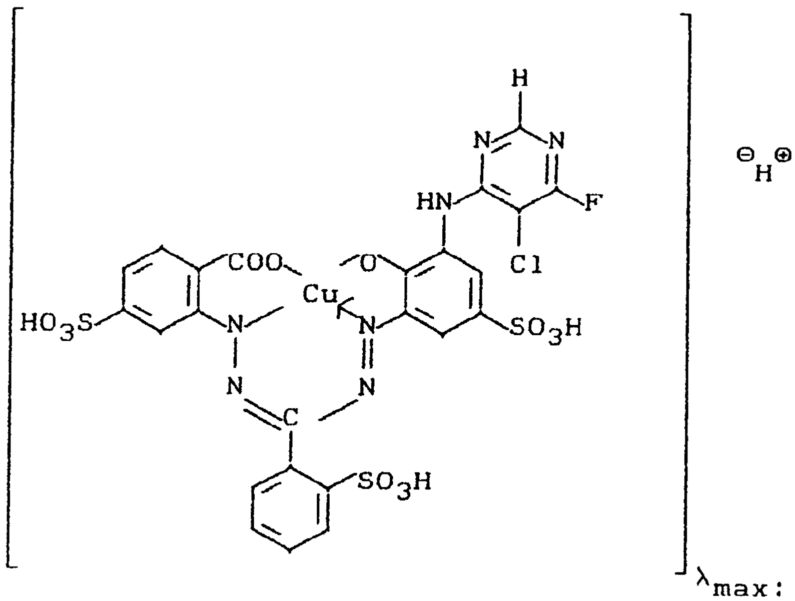

$\lambda_{max}$: 588 nm

Der Farbstoff löst sich in Wasser mit dunkelblauer Farbe und liefert auf Cellulose-Materialien blaue Färbungen und Drucke.

Beispiele 2-54

Man erhält weitere interessante blaue Farbstoffe, wenn man die in der Tabelle 1, Kolonne 1, angegebenen o-Aminobenzoesäuren mit den in Tabelle 1, Kolonne 2 angegebenen Aldehyden zu Hydrazonen kondensiert, die 2-Aminophenol-Komponenten aus Kolonne 3, Tabelle 1, diazotiert und in Anwesenheit eines Metallsalzes aus Kolonne 4, Tabelle 1, kuppelt, die Arylaminogruppe(n) verseift und anschließend mit 5-Chlor-4,6-difluorpyrimidin kondensiert.

Die so erhaltenen Reaktivfarbstoffe liefern auf Cellulose-Materialien blaue Färbungen und Drucke mit den in Kolonne 5, Tabelle 1 angegebenen physikalischen Daten.

Tabelle 1

| Bsp. | 2-Aminobenzoesäure-komponente | Aldehyd | 2-Aminophenol-komponente | Me | $\lambda_{max}$ [nm] $(H_2O)$ |
|---|---|---|---|---|---|
| 2 | 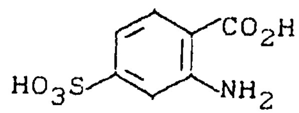 | 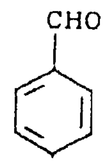 | 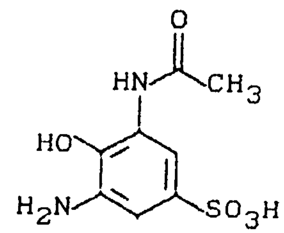 | Cu | 608 |
| 3 | 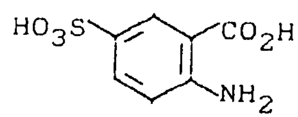 | 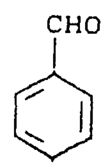 | 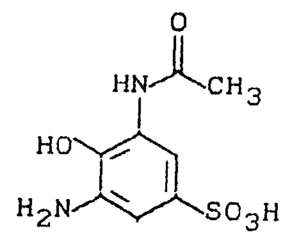 | Cu | 612 |
| 4 | 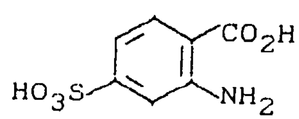 | 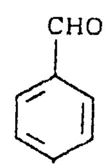 | 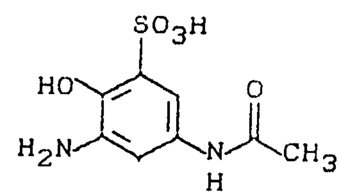 | Cu | 622 |

Tabelle 1 (Fortsetzung)

| Bsp. | 2-Aminobenzoesäure-komponente | Aldehyd | 2-Aminophenol-komponente | Me | $\lambda_{max}$ [nm] ($H_2O$) |
|---|---|---|---|---|---|
| 5 | 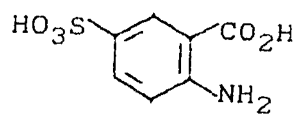 | 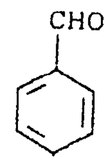 | 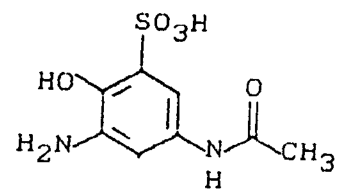 | Cu | 628 |
| 6 | 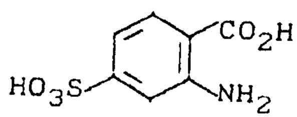 | 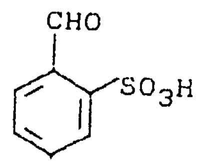 | 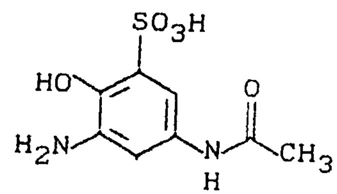 | Cu | 604 |
| 7 | 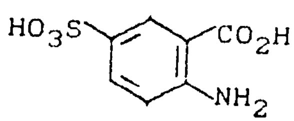 | 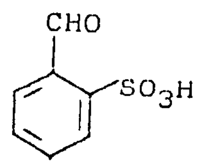 | 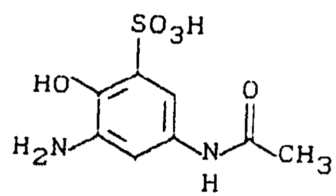 | Cu | 610 |

Tabelle 1 (Fortsetzung)

| Bsp. | 2-Aminobenzoesäure-komponente | Aldehyd | 2-Aminophenol-komponente | Me | $\lambda_{max}$ [nm] ($H_2O$) |
|---|---|---|---|---|---|
| 8 | 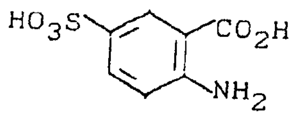 | 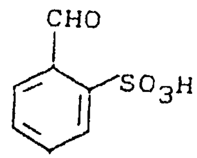 | 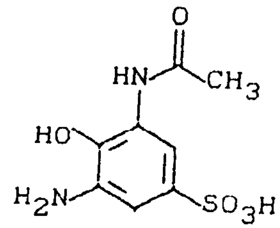 | Cu | 602 |
| 9 | 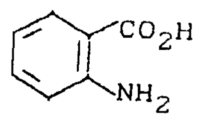 | 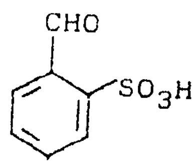 | 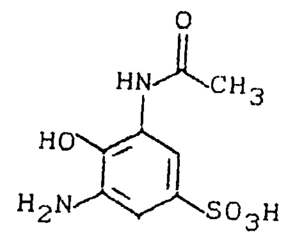 | Cu | 588 |
| 10 | 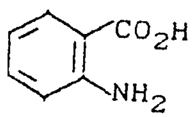 | 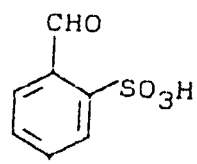 | 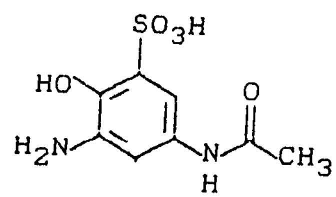 | Cu | |

Tabelle 1 (Fortsetzung)

| Bsp. | 2-Aminobenzoesäure-komponente | Aldehyd | 2-Aminophenol-komponente | Me |
|---|---|---|---|---|
| 11 | 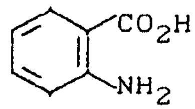 | 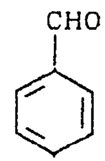 | 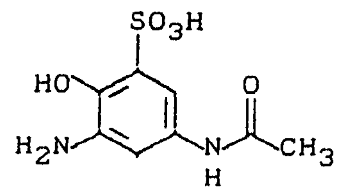 | Cu |
| 12 | 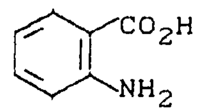 | 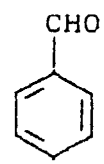 | 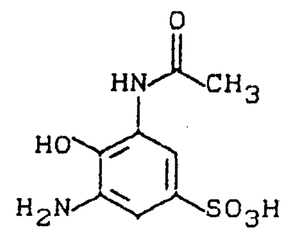 | Cu |
| 13 | 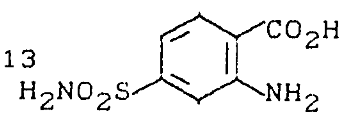 | 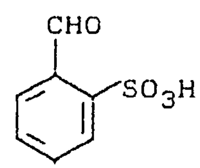 | 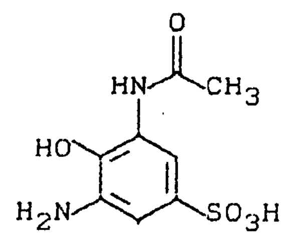 | Cu |

Tabelle 1 (Fortsetzung)

| Bsp. | 2-Aminobenzoesäure-komponente | Aldehyd | 2-Aminophenol-komponente | Me |
|---|---|---|---|---|
| 14 | 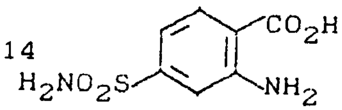 | 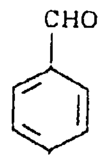 | 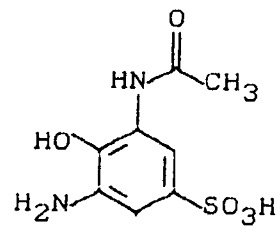 | Cu |
| 15 | 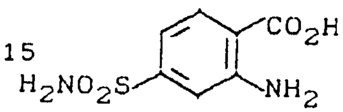 | 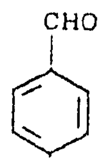 | 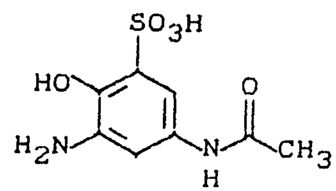 | Cu |
| 16 | 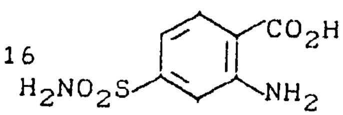 | 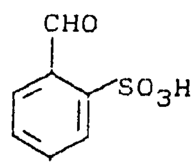 | 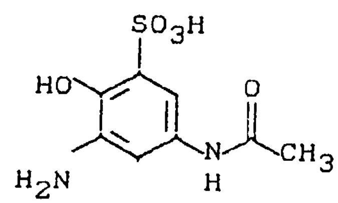 | Cu |

<u>Tabelle 1</u> (Fortsetzung)

| Bsp. | 2-Aminobenzoesäure-komponente | Aldehyd | 2-Aminophenol-komponente | Me | $\lambda_{max}$ [nm] ($H_2O$) |
|---|---|---|---|---|---|
| 17 | 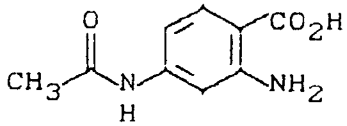 | 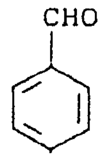 | 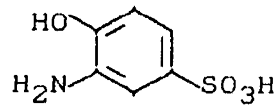 | Cu | |
| 18 | 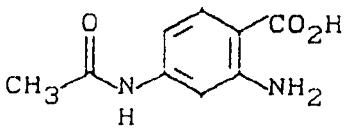 | 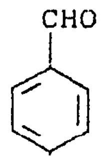 | 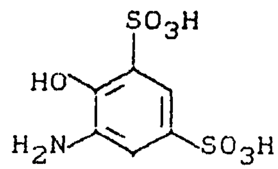 | Cu | 594 |
| 19 | 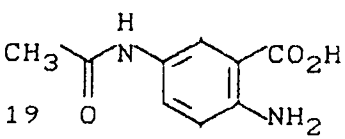 | 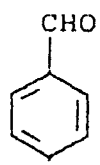 | 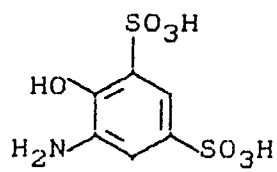 | Cu | 598 |

Tabelle 1 (Fortsetzung)

| Bsp. | 2-Aminobenzoesäure-komponente | Aldehyd | 2-Aminophenol-komponente | Me | $\lambda_{max}$ [nm] ($H_2O$) |
|---|---|---|---|---|---|
| 20 | 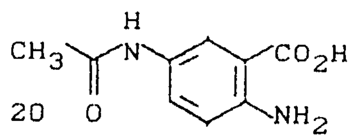 | 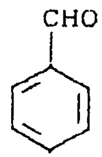 | 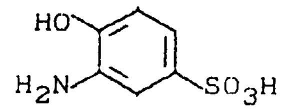 | Cu | |
| 21 | 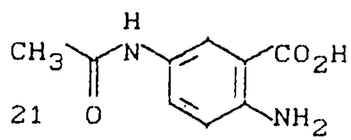 | 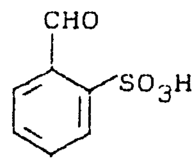 | 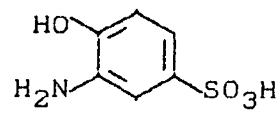 | Cu | 594 |
| 22 | 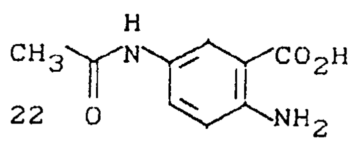 | 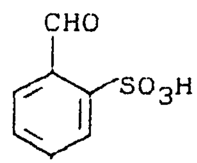 | 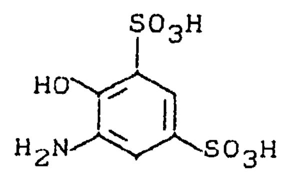 | Cu | |

Tabelle 1 (Fortsetzung)

| Bsp. | 2-Aminobenzoesäure-komponente | Aldehyd | 2-Aminophenol-komponente | Me |
|---|---|---|---|---|
| 23 | 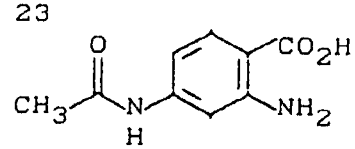 | 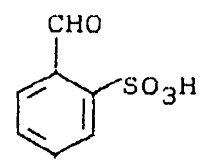 | 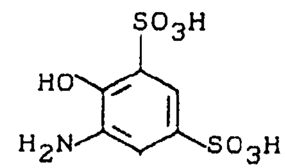 | Cu |
| 24 | 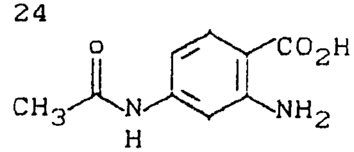 | 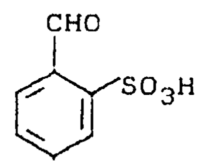 | 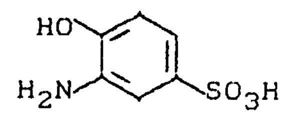 | Cu |
| 25 | 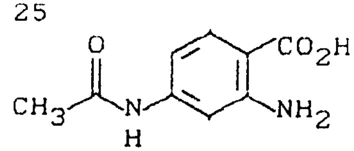 | 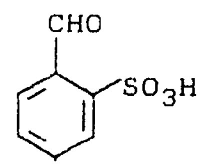 | 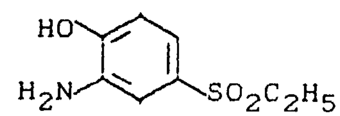 | Cu |

Tabelle 1 (Fortsetzung)

| Bsp. | 2-Aminobenzoesäure-komponente | Aldehyd | 2-Aminophenol-komponente | Me |
|---|---|---|---|---|
| 26 | 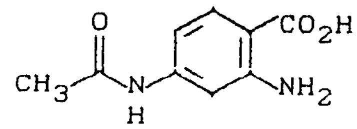 | 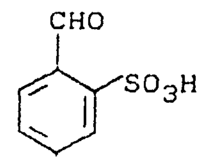 | 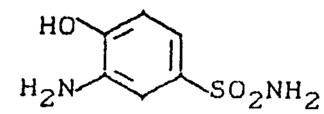 | Cu |
| 27 | 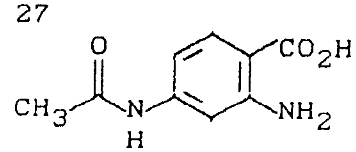 | 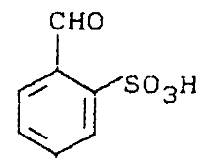 | 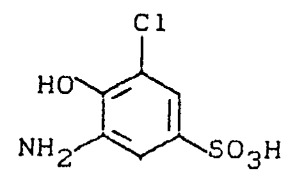 | Cu |
| 28 | 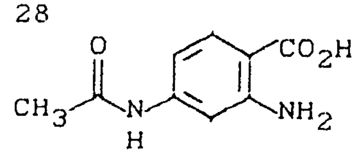 | 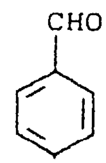 | 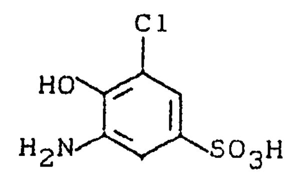 | Cu |

Tabelle 1 (Fortsetzung)

| Bsp. | 2-Aminobenzoesäure-komponente | Aldehyd | 2-Aminophenol-komponente | Me |
|---|---|---|---|---|
| 29 | 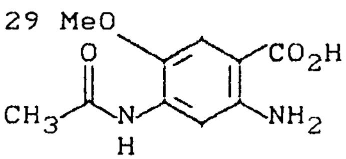 | 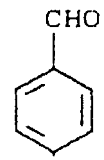 | 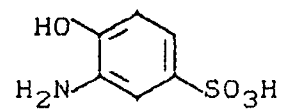 | Cu |
| 30 | 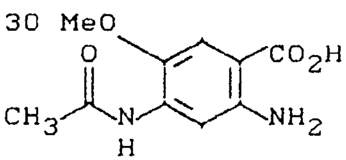 | 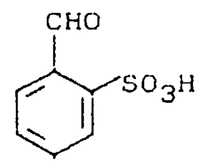 | 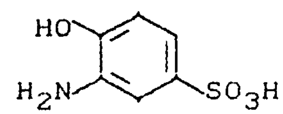 | Cu |
| 31 | 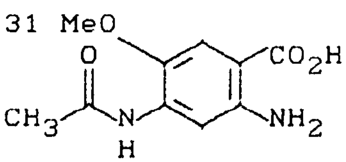 | 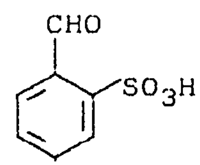 | 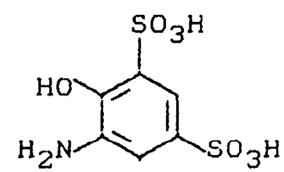 | Cu |

Tabelle 1 (Fortsetzung)

| Bsp. | 2-Aminobenzoesäure-komponente | Aldehyd | 2-Aminophenol-komponente | Me |
|---|---|---|---|---|
| 32 | 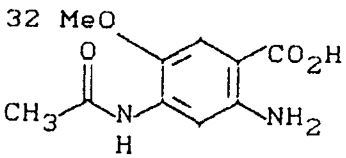 | 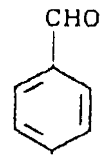 | 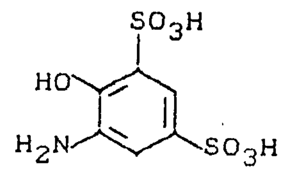 | Cu |
| 33 | 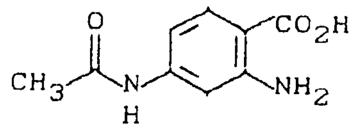 | 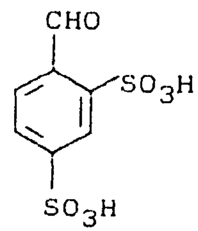 | 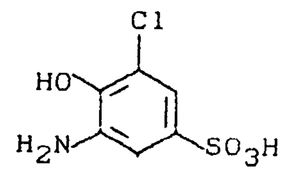 | Cu |
| 34 | 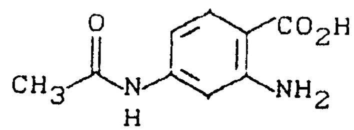 | 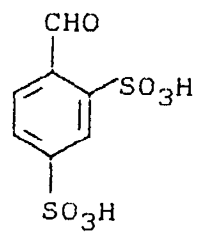 | 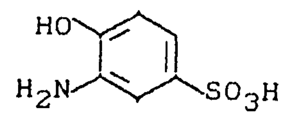 | Cu |

Tabelle 1 (Fortsetzung)

| Bsp. | 2-Aminobenzoesäure-komponente | Aldehyd | 2-Aminophenol-komponente | Me |
|---|---|---|---|---|
| 35 | 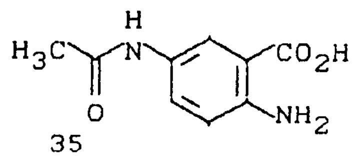 | 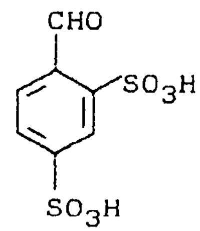 | 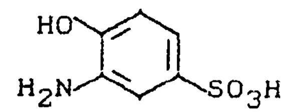 | Cu |
| 36 | 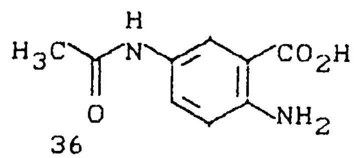 | 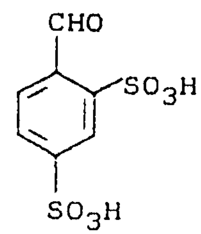 | 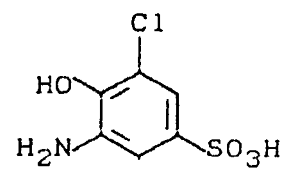 | Cu |
| 37 | 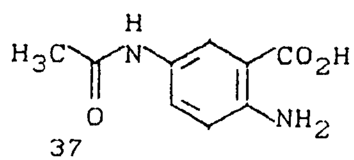 | 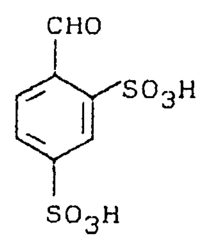 | 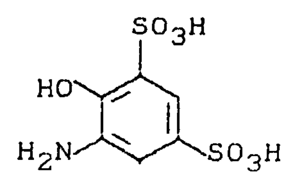 | Cu |

Tabelle 1 (Fortsetzung)

| Bsp. | 2-Aminobenzoesäure-komponente | Aldehyd | 2-Aminophenol-komponente | Me |
|---|---|---|---|---|
| 38 | 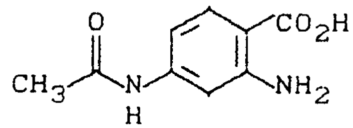 | 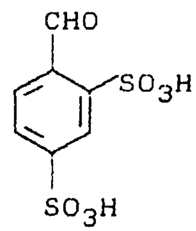 | 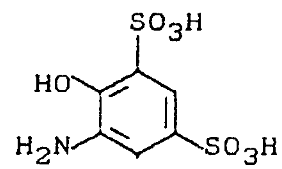 | Cu |
| 39 | 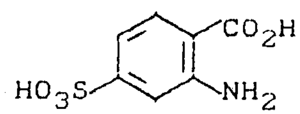 | 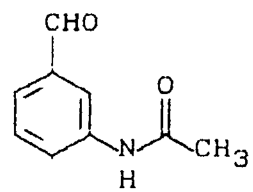 | 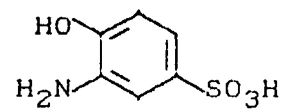 | Cu |
| 40 | 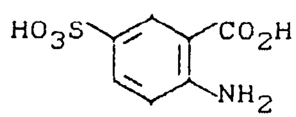 | 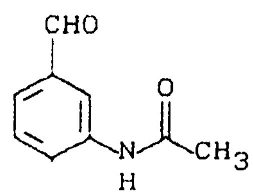 | 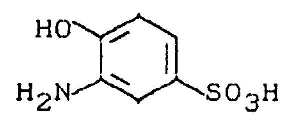 | Cu |

<u>Tabelle 1</u> (Fortsetzung)

| Bsp. | 2-Aminobenzoesäure-komponente | Aldehyd | 2-Aminophenol-komponente | Me |
|---|---|---|---|---|
| 41 | 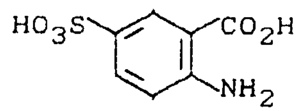 | 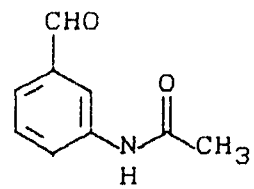 | 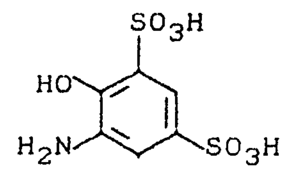 | Cu |
| 42 | 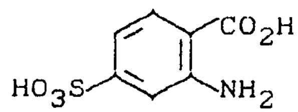 | 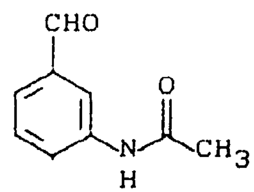 | 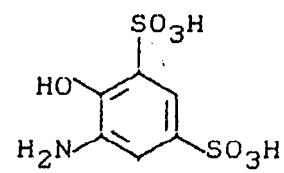 | Cu |
| 43 | 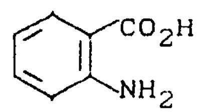 | 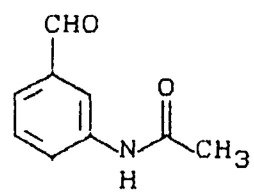 | 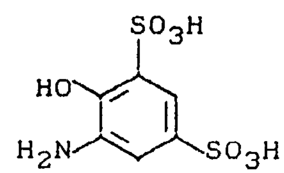 | Cu |

<u>Tabelle 1</u> (Fortsetzung)

| Bsp. | 2-Aminobenzoesäure-komponente | Aldehyd | 2-Aminophenol-komponente | Me |
|---|---|---|---|---|
| 44 | 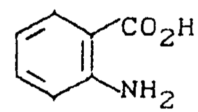 | 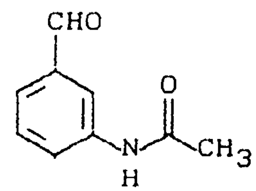 | 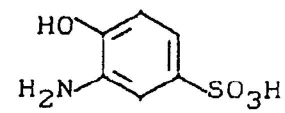 | Cu |
| 45 | 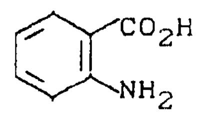 | 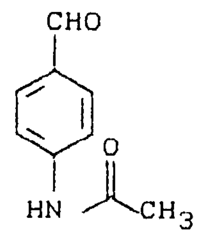 | 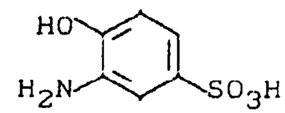 | Cu |
| 46 | 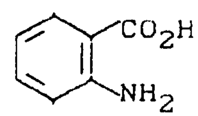 | 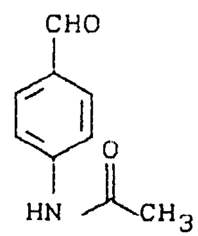 | 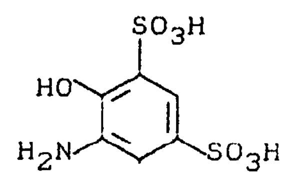 | Cu |

Tabelle 1 (Fortsetzung)

| Bsp. | 2-Aminobenzoesäure-komponente | Aldehyd | 2-Aminophenol-komponente | Me |
|---|---|---|---|---|
| 47 | 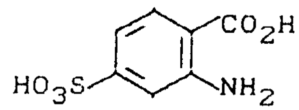 | 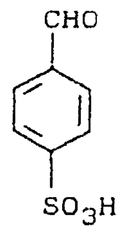 | 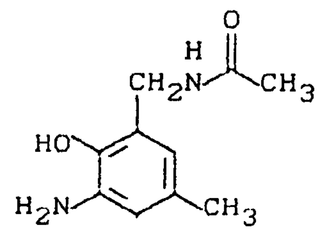 | Cu |
| 48 | 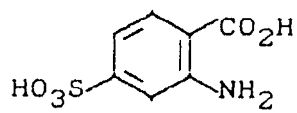 | 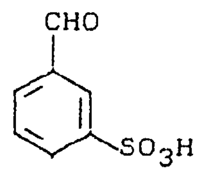 | 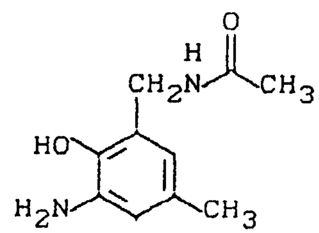 | Cu |
| 49 | 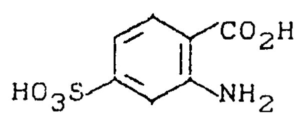 | 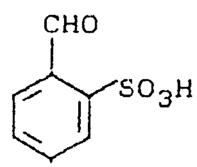 | 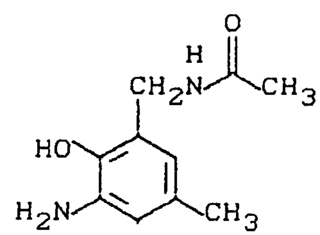 | Cu |

<u>Tabelle 1</u> (Fortsetzung)

| Bsp. | 2-Aminobenzoesäure-komponente | Aldehyd | 2-Aminophenol-komponente | Me |
|---|---|---|---|---|
| 50 | 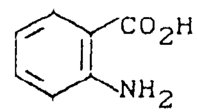 | 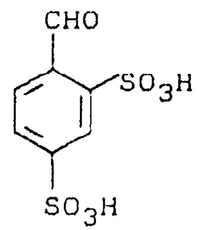 | 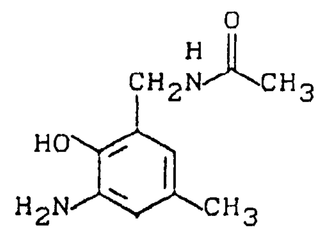 | Cu |
| 51 | 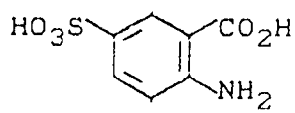 | 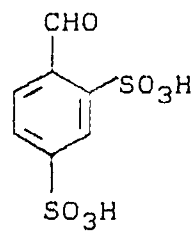 | 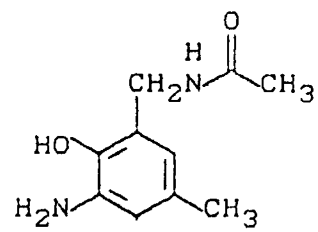 | Cu |
| 52 | 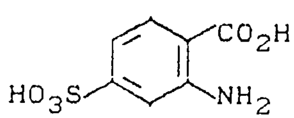 | 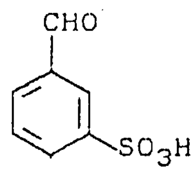 | 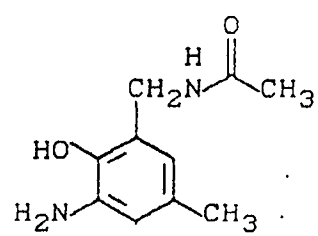 | Cu |

Tabelle 1 (Fortsetzung)

| Bsp. | 2-Aminobenzoesäure-komponente | Aldehyd | 2-Aminophenol-komponente | Me |
|---|---|---|---|---|
| 53 | 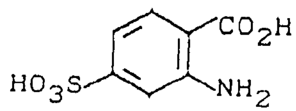 | 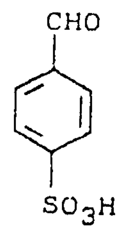 | 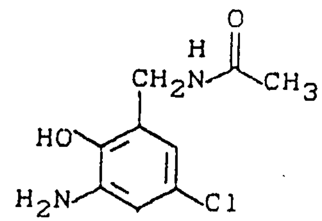 | Cu |
| 54 | 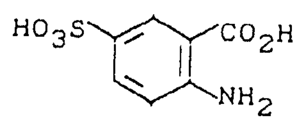 | 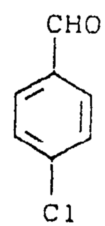 | 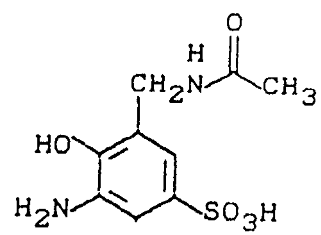 | Cu |

Beispiel 55

Ersetzt man in Beispiel 1 die Kupfersulfatlösung durch die äquivalente Menge an Nickelsulfatlösung und verfährt weiter nach den Angaben aus Beispiel 1, so erhält man ein Produkt, das in Form der freien Säure folgender Formel entspricht

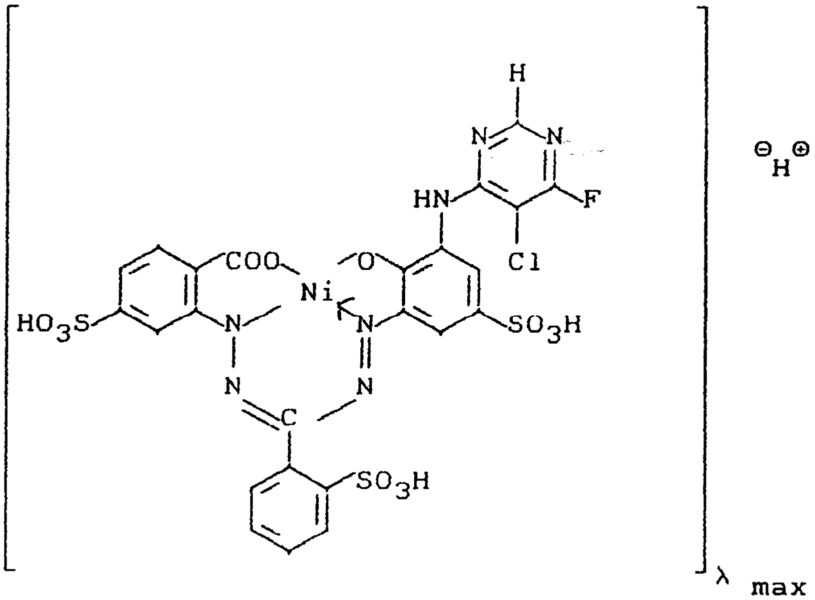

λ max: 536 nm

Der Farbstoff löst sich in Wasser mit graublauer Farbe und liefert auf Cellulose-Materialien graublaue Färbungen und Drucke.

Beispiel 56

Jeweils 0,5 Mol der Farbbase (Tetranatriumsalz) aus Beispiel 2 und der Farbbase (Tetranatriumsalz) aus Beispiel 3, werden intensiv gemischt, in 2000 ml Wasser gelöst und bei pH 6,7 und 40-50°C mit 1,2 Mol 5-Chlor-4,6-difluorpyrimidin kondensiert.

Dabei wird der pH-Wert mit einer Alkali-bicarbonat, -carbonat oder -hydroxid-Lösung konstant gehalten.

Nach vollständiger Kondensation mit dem Pyrimidinderivat wird das Farbstoffgemisch ausgesalzen, isoliert und getrocknet,

Man erhält ein blaues Farbstoffpulver, das in Form der freien Säuren einem Gemisch des Farbstoffs der Formel

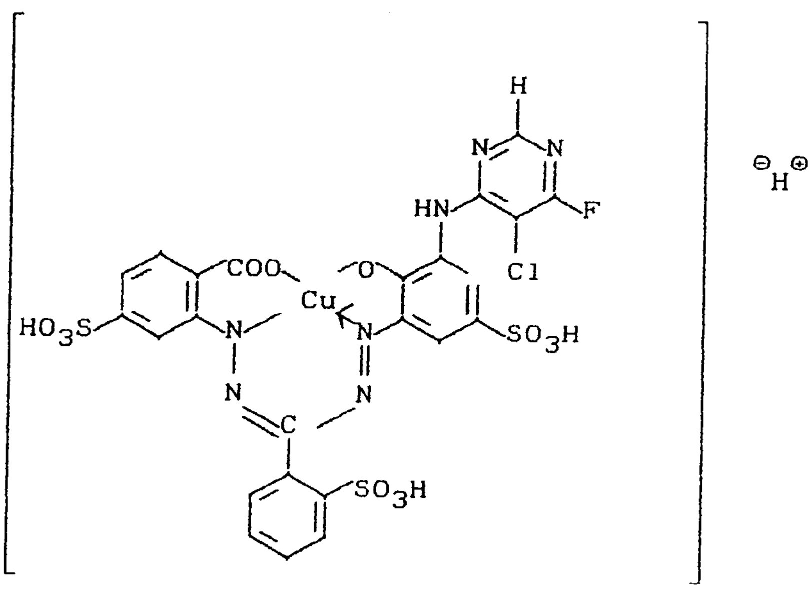

und einem Farbstoff der Formel

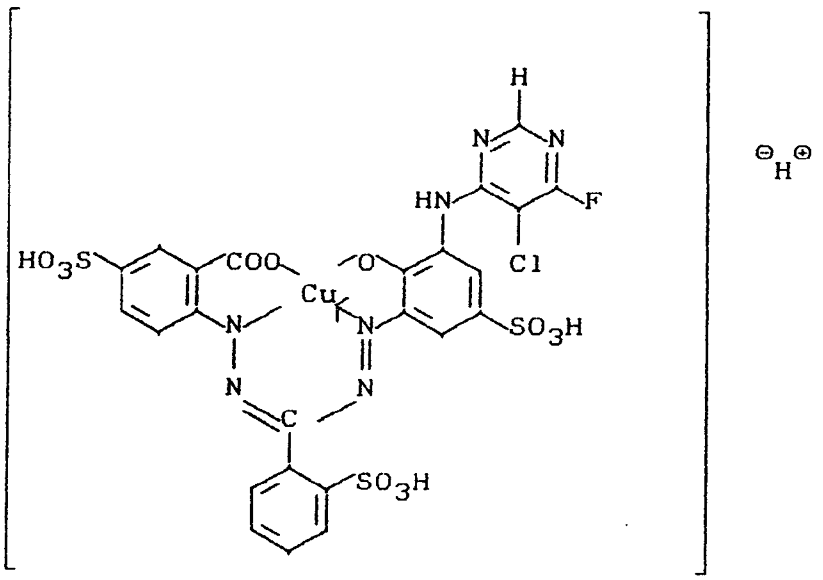

enspricht.

Das Farbstoffgemisch löst sich in Wasser mit dunkelblauer Farbe und liefert auf Cellulose-Materialien blaue Färbungen und Drucke.

**Patentansprüche**

**1.** Formazanfarbstoffe der Formel

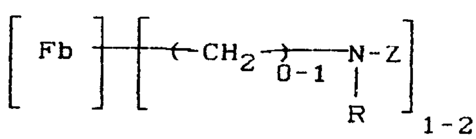

worin

Fb ein Rest der Formel

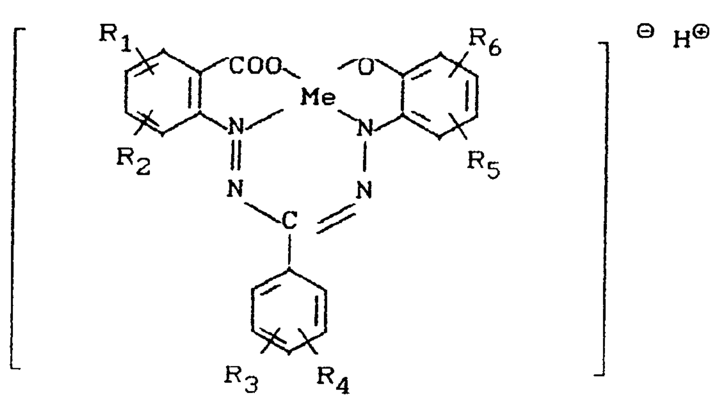

ist,

$R_1$ bis $R_6$ unabhängig voneinander Wasserstoff, $C_1$-$C_4$-Alkyl, $C_1$-$C_4$-Alkoxy, Hydroxy, Halogen, Carboxy, Sulfonamido, Alkyl- oder Arylcarbonylamino- oder -sulfonylamino, oder -$SO_3H$,

R Wasserstoff, $C_1$-$C_4$-Alkyl,

Z faserreaktiver Rest der Formel

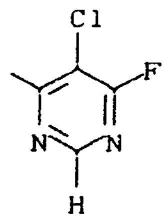

| | |
|---|---|
| m | 0 oder 1 und |
| Me | ein zweiwertiges Metallatom bedeutet. |

**2.** Farbstoffe des Anspruchs 1 der Formeln

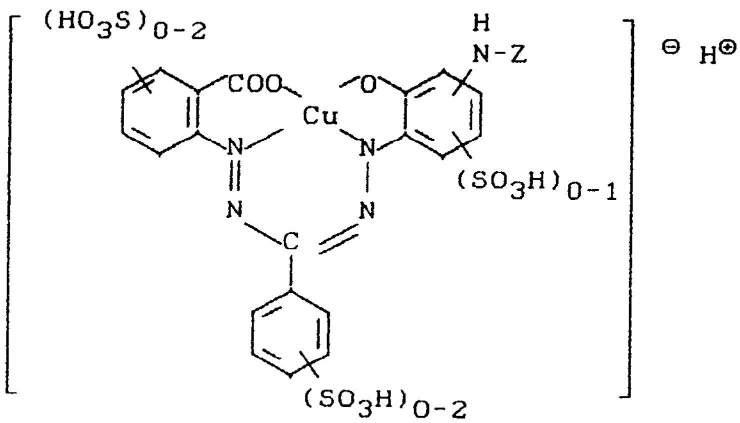

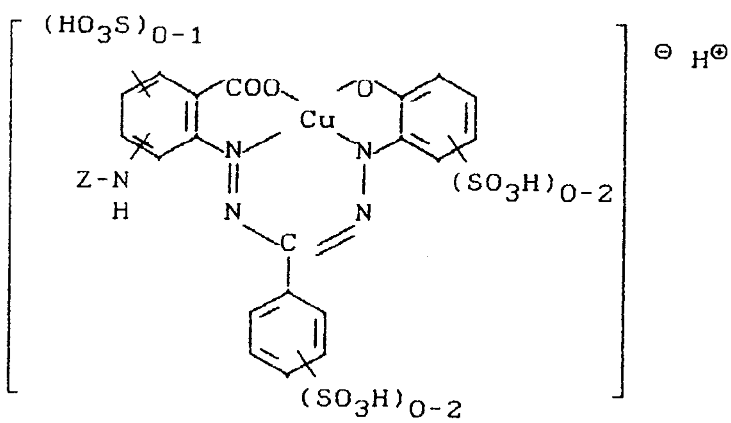

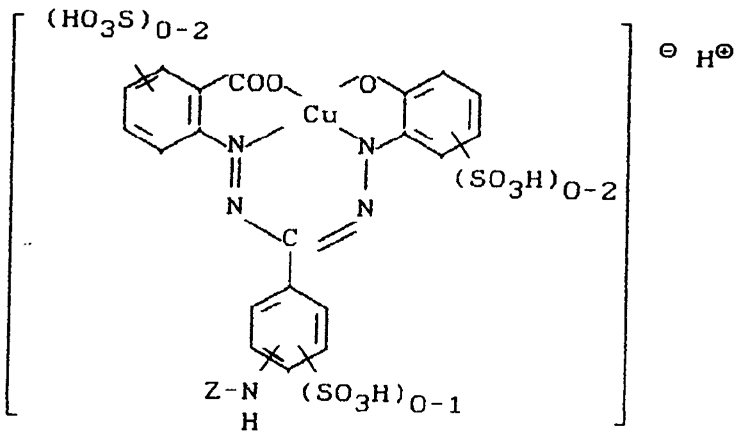

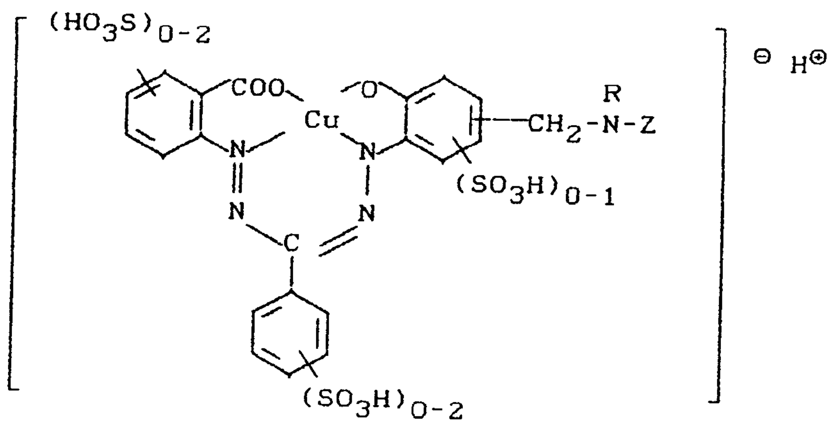

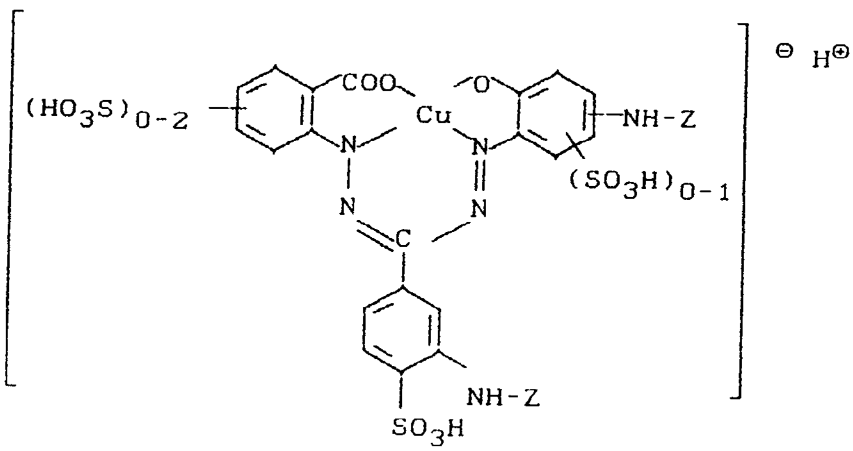

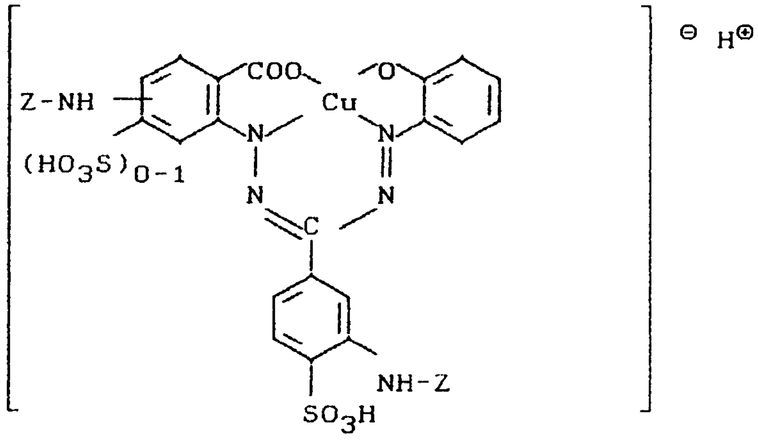

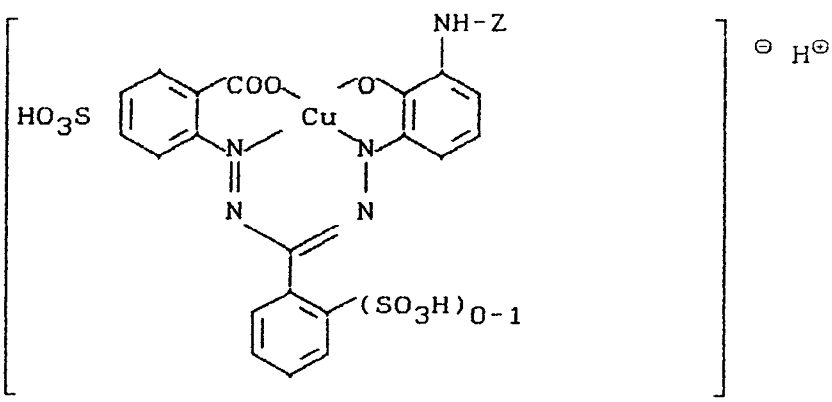

worin
R und Z die in Anspruch 1 angegebene Bedeutung haben.

3. Farbstoffe gemäß Anspruch 1 der Formeln

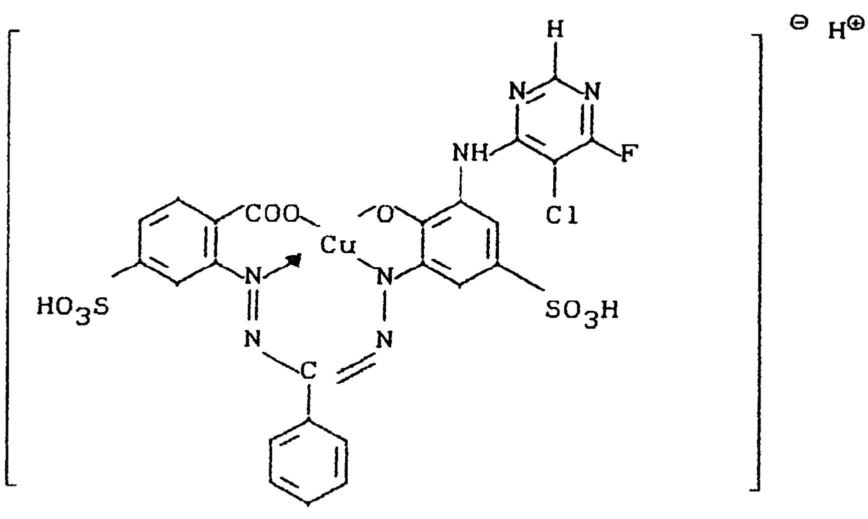

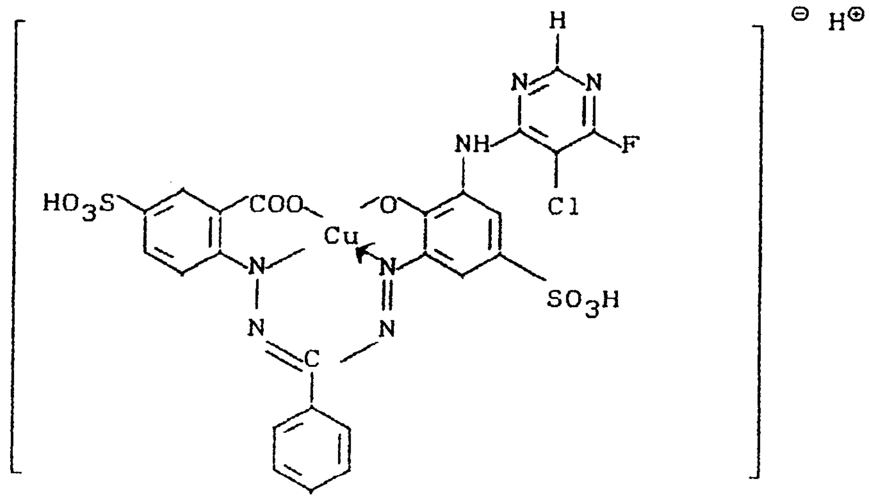

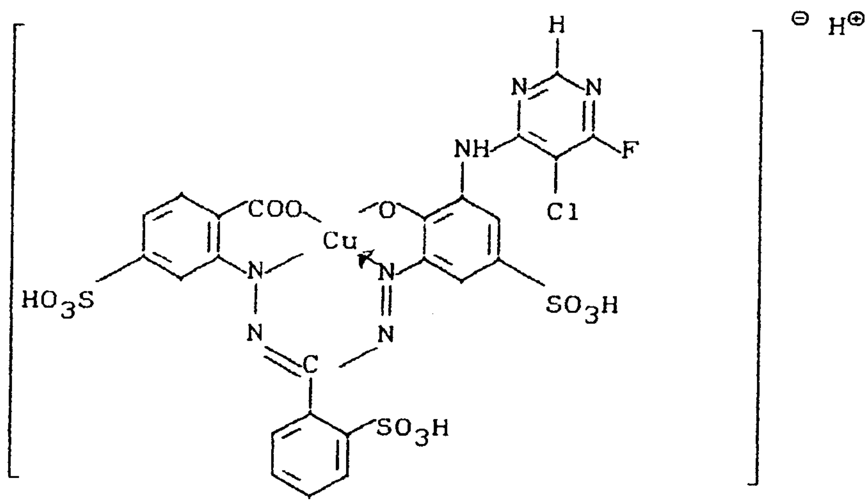

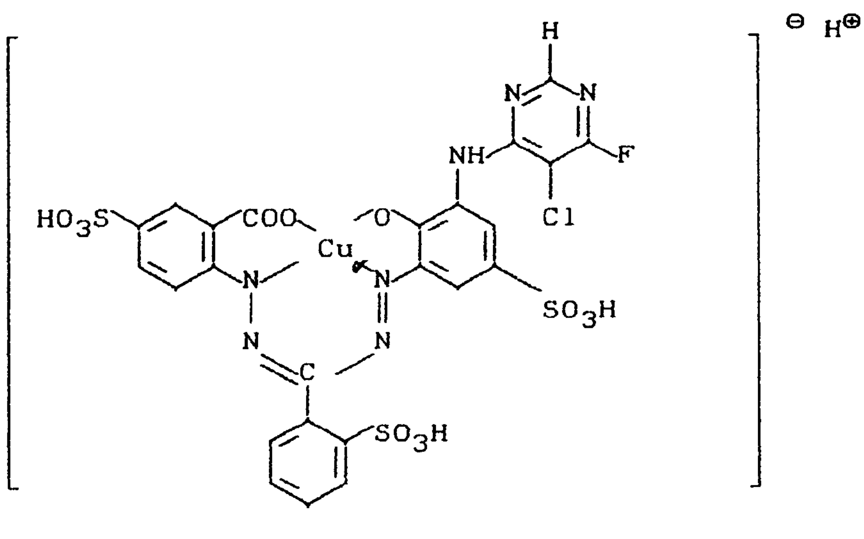

4. Verwendung der Farbstoffe der Ansprüche 1-3 zum Färben und Bedrucken von hydroxylgruppen- und

amidgruppenhaltigen Materialien.

## Claims

1. Formazan dyestuffs of the formula

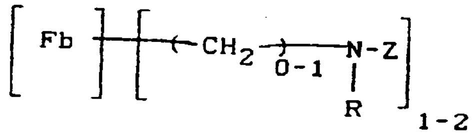

,

in which

Fb is a radical of the formula

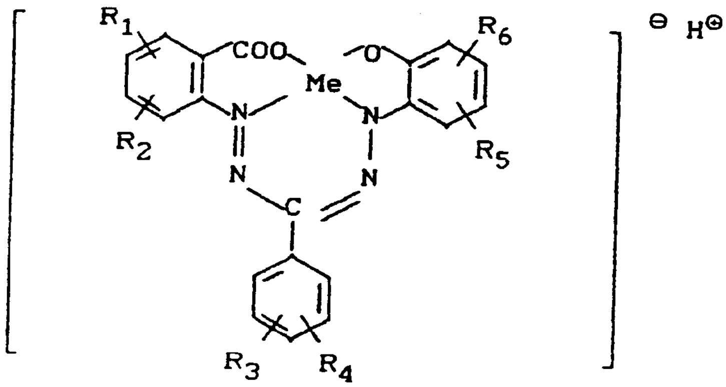

$R_1$ to $R_6$, independently of one another, are hydrogen, $C_1$-$C_4$-alkyl, $C_1$-$C_4$-alkoxy, hydroxyl, halogen, carboxyl, sulphonamido, alkyl- or arylcarbonylamino or -sulphonylamino, or $-SO_3H$,

R is hydrogen, $C_1$-$C_4$-alkyl,

Z is a fibre-reactive radical of the formula

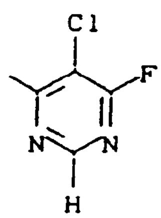

m is 0 or 1 and

Me is a divalent metal atom.

2. Dyestuffs of Claim 1 of the formulae

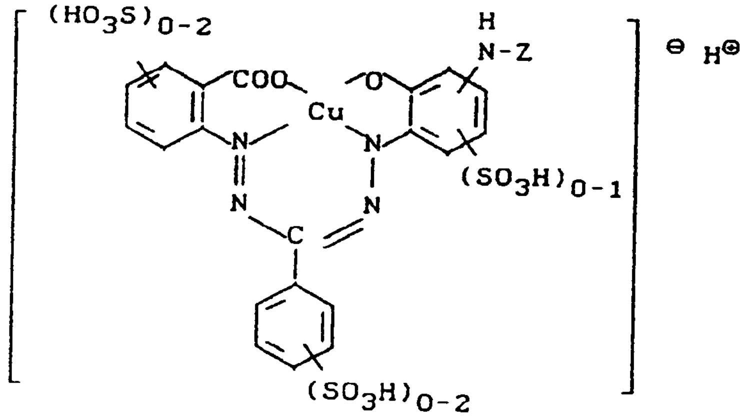

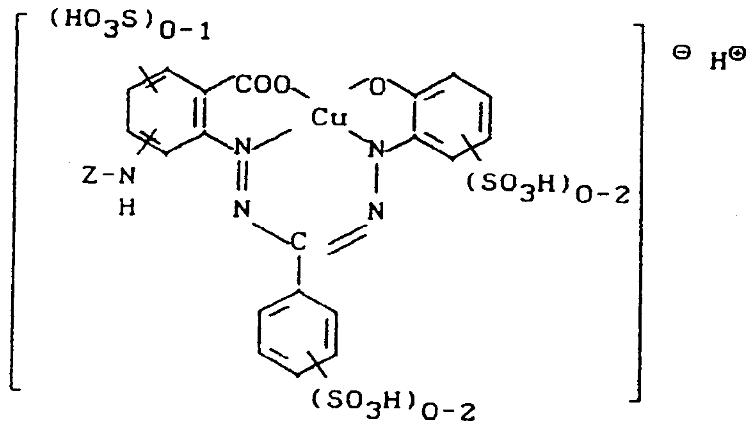

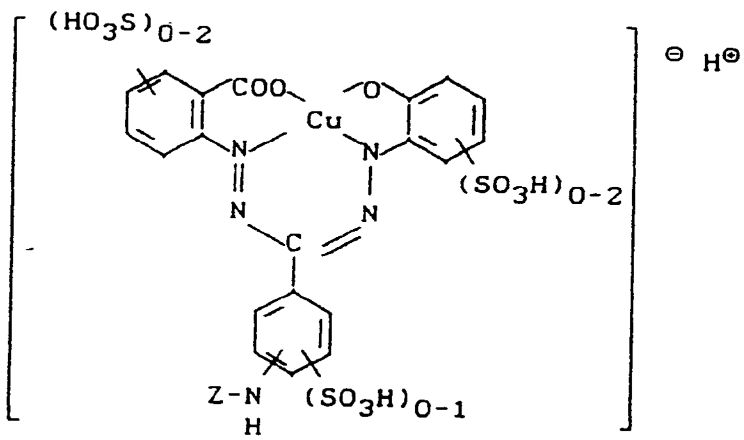

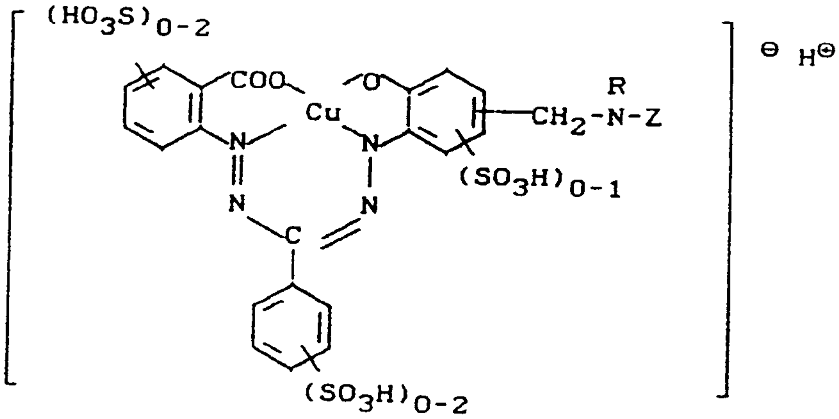

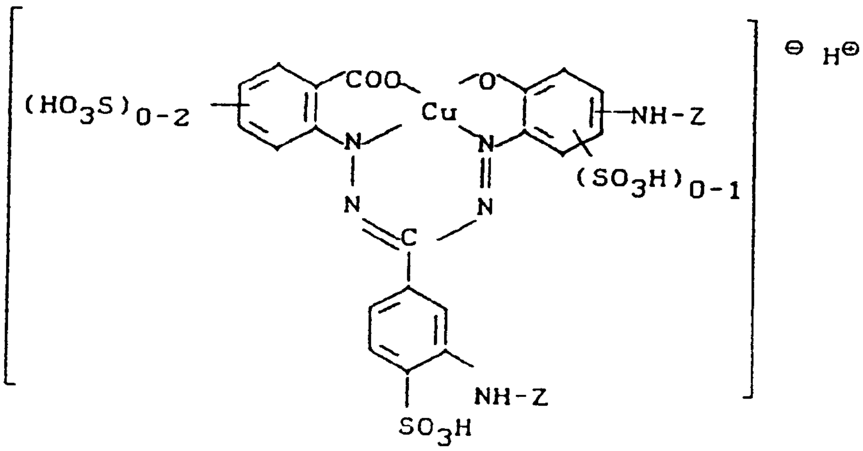

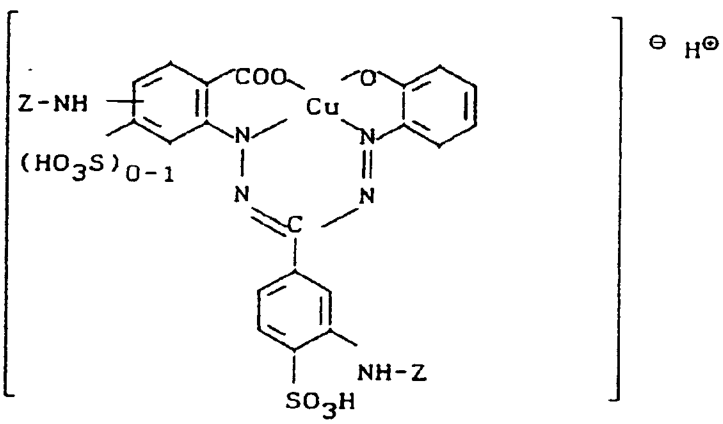

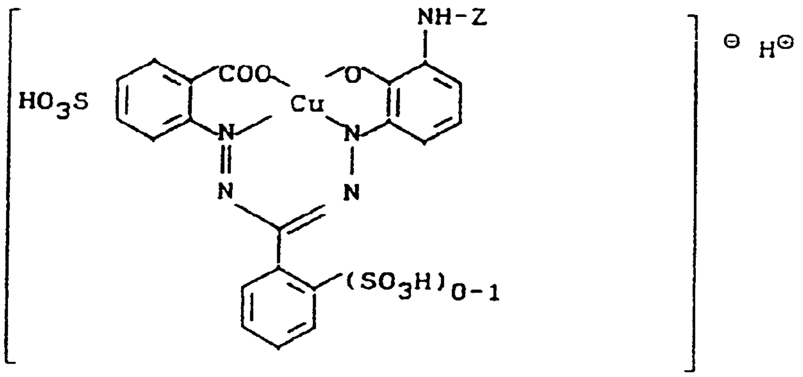

in which
R and Z have the meaning given in Claim 1.

**3.** Dyestuffs according to Claim 1 of the formulae

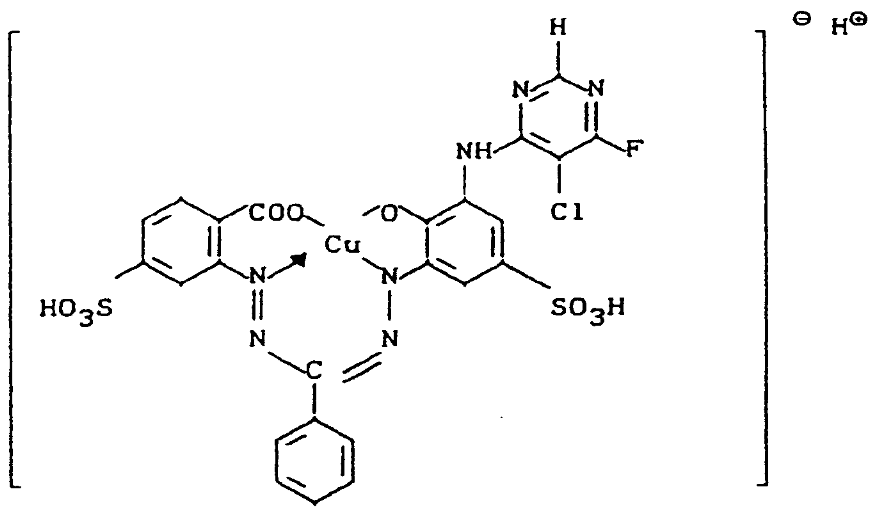

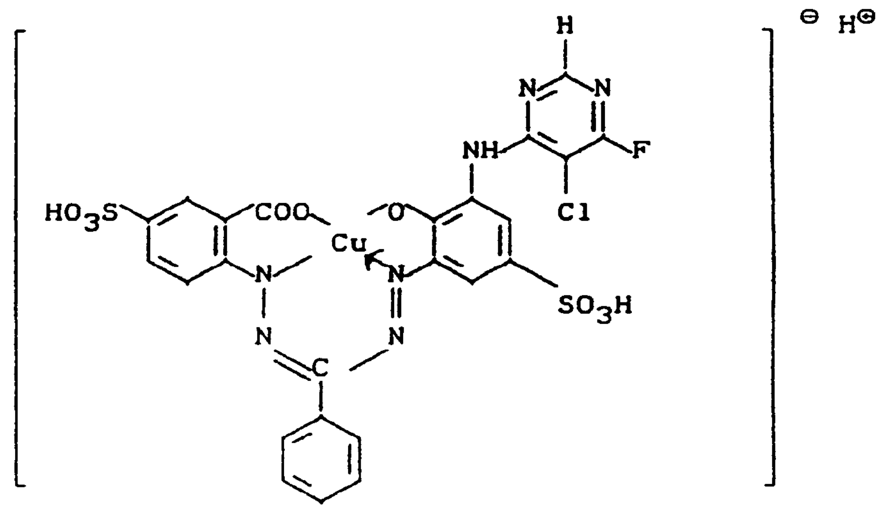

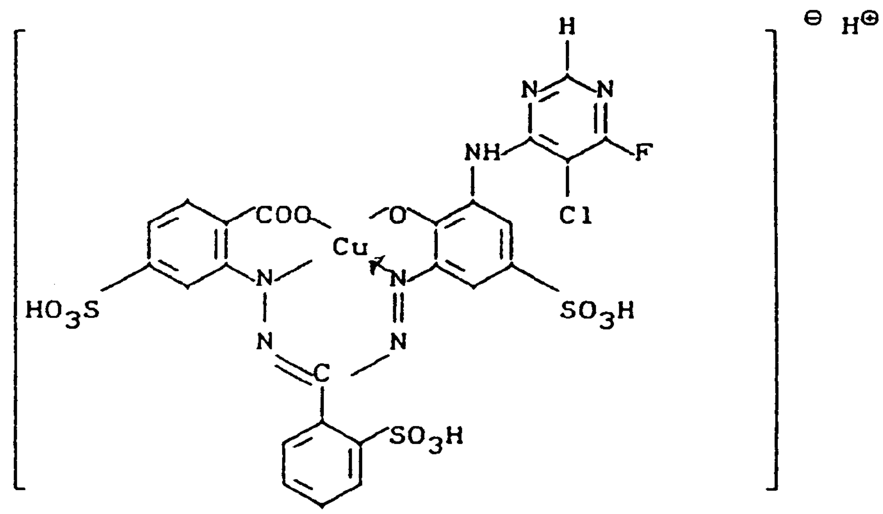

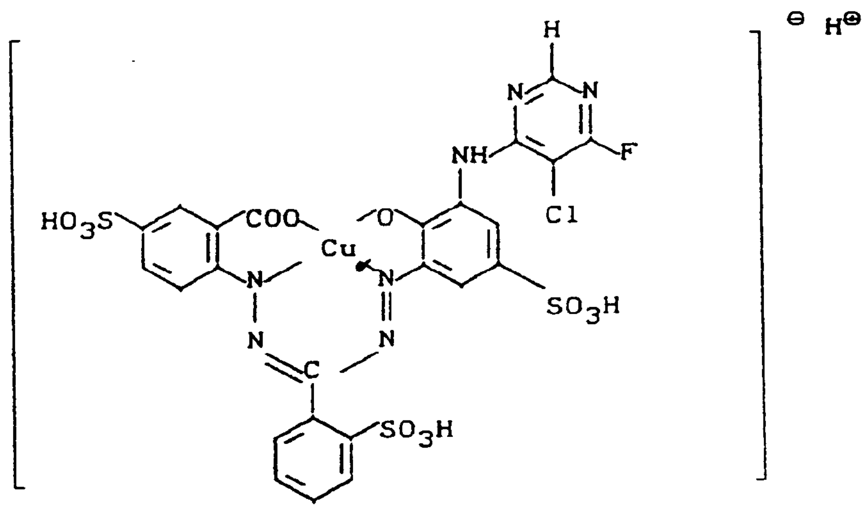

**4.** Use of the dyestuffs of Claims 1-3 for dyeing and printing hydroxyl- and amido-containing materials.

## Revendications

**1.** Colorants de formazane de formule

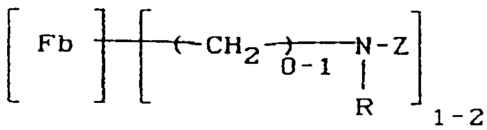

dans laquelle

Fb est un reste de formule

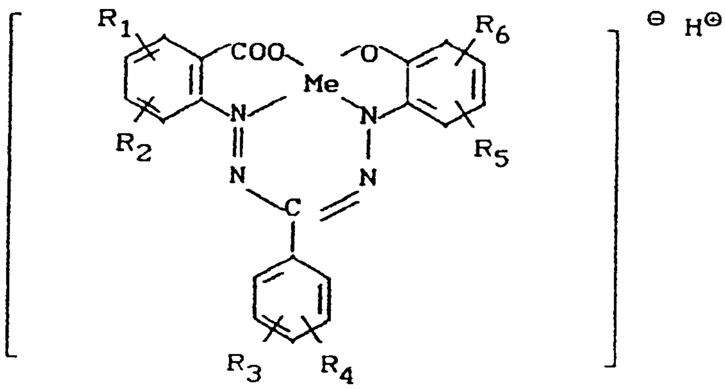

$R_1$ à $R_6$ représentent, indépendamment les uns des autres, de l'hydrogène, un groupe alkyle en $C_1$ à $C_4$, alkoxy en $C_1$ à $C_4$, hydroxy, un halogène, un groupe carboxy, sulfonylamido, alkyl- ou arylcarbonylamino ou -sulfonylamino ou un groupe $-SO_3H$,

R représente l'hydrogène, un groupe alkyle en $C_1$ à $C_4$,

Z est un reste réactif envers la fibre, de formule

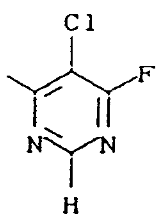

m a la valeur 0 ou 1 et

Me désigne un atome de métal divalent.

**2.** Colorants suivant la revendication 1, de formules

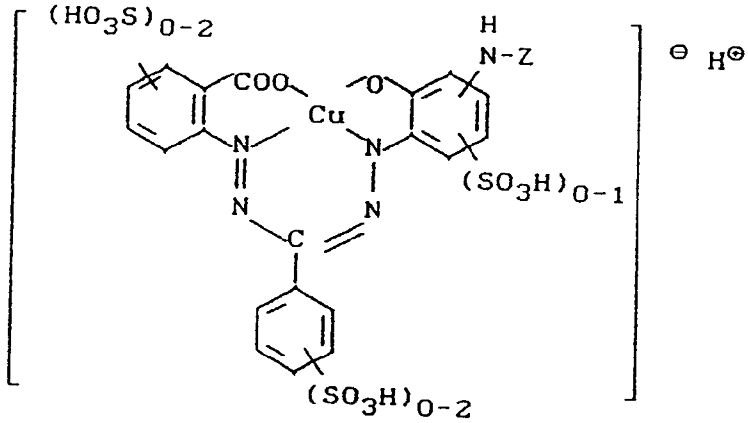

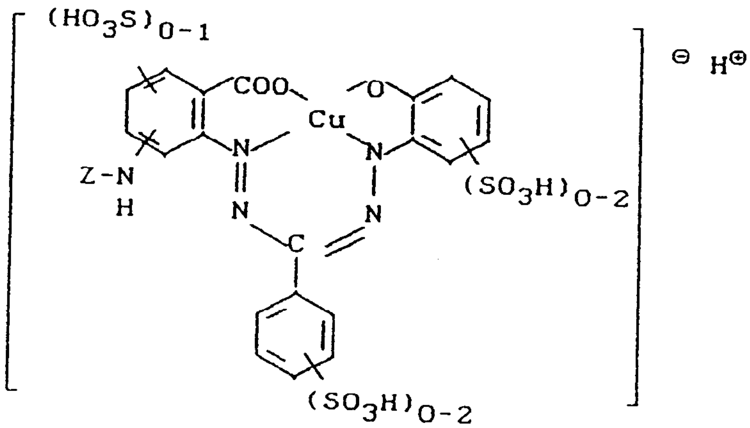

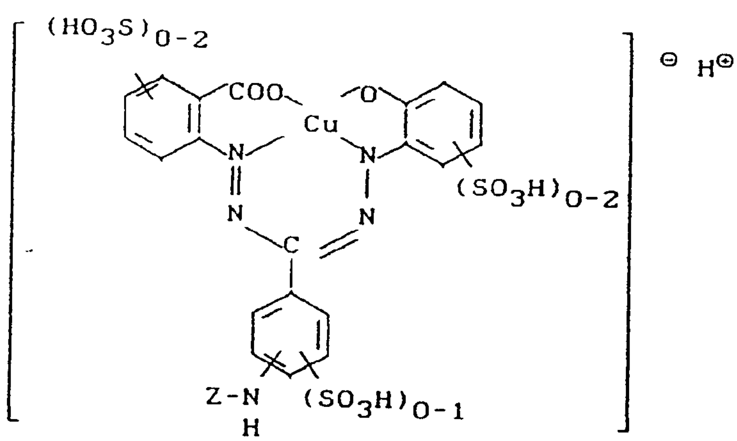

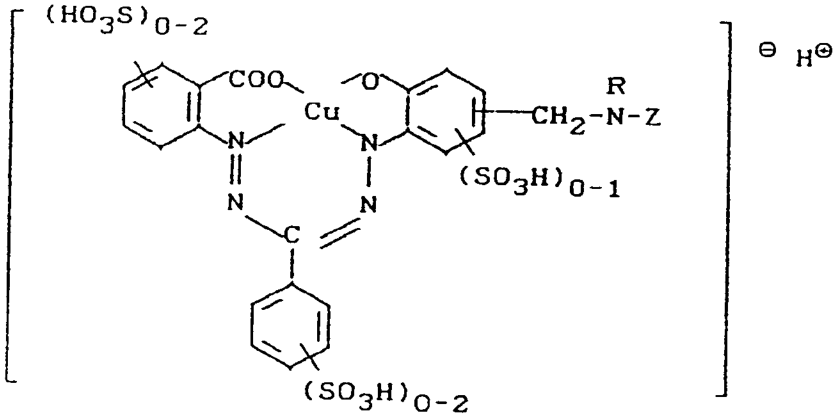

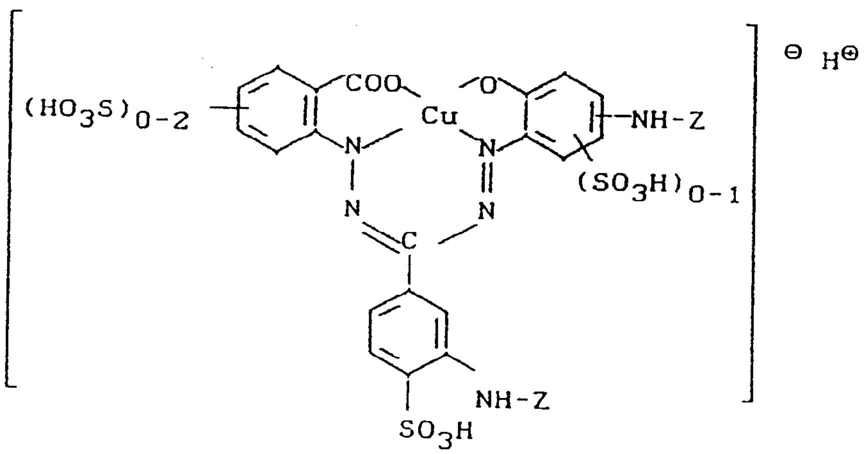

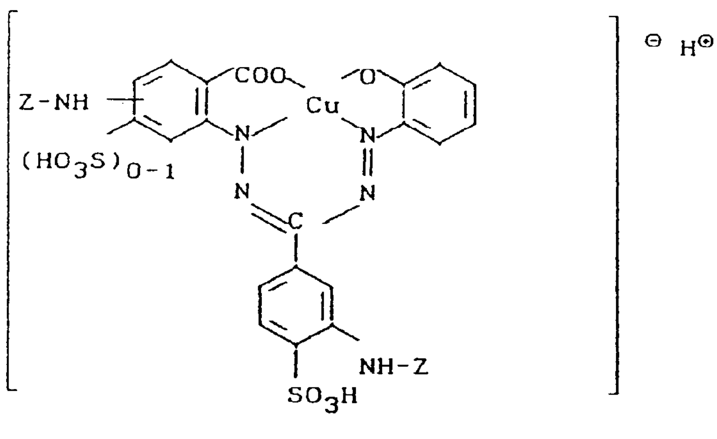

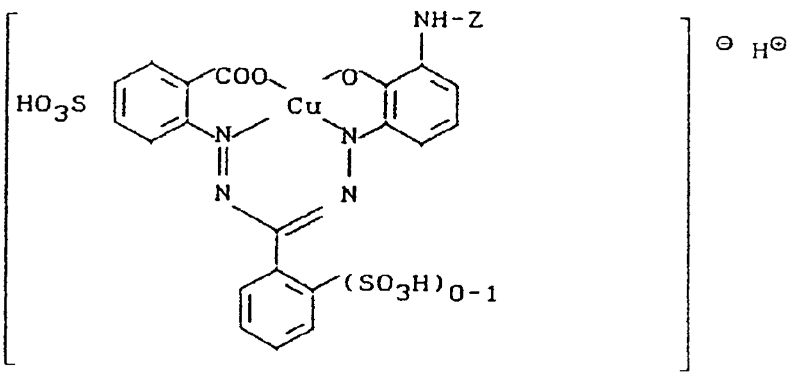

où

R et Z ont la définition indiquée dans la revendication 1.

3. Colorants suivant la revendication 1, de formules

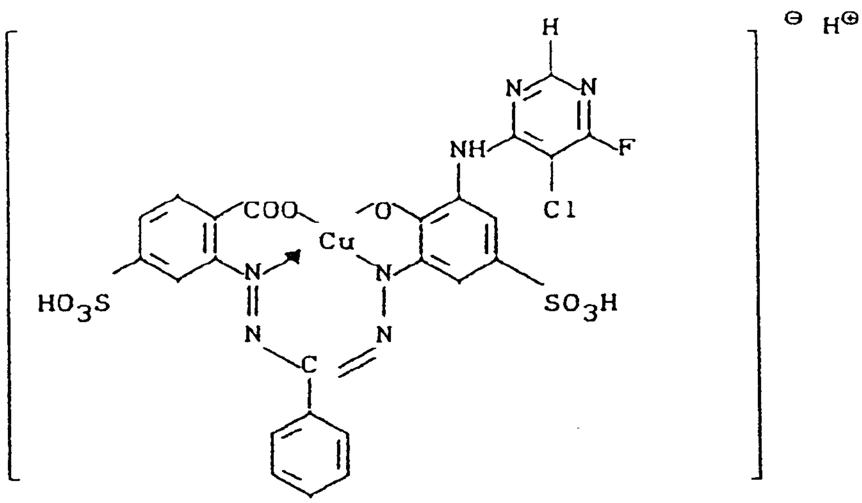

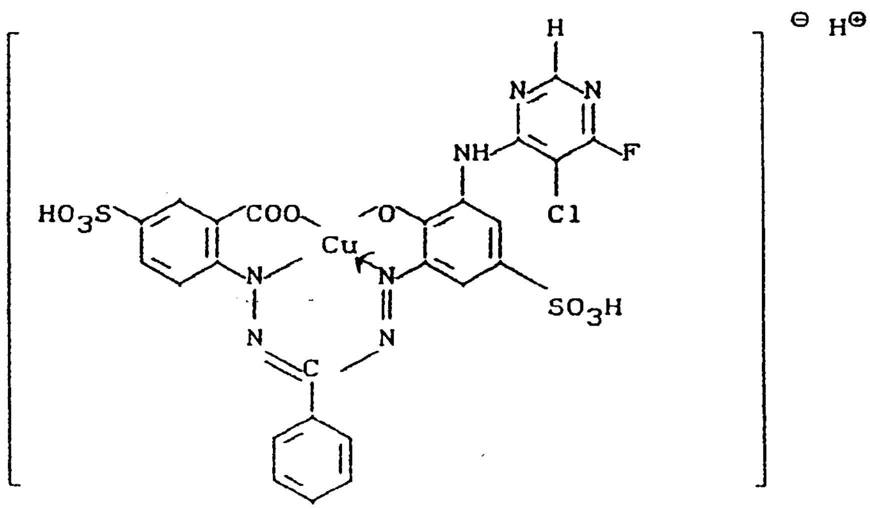

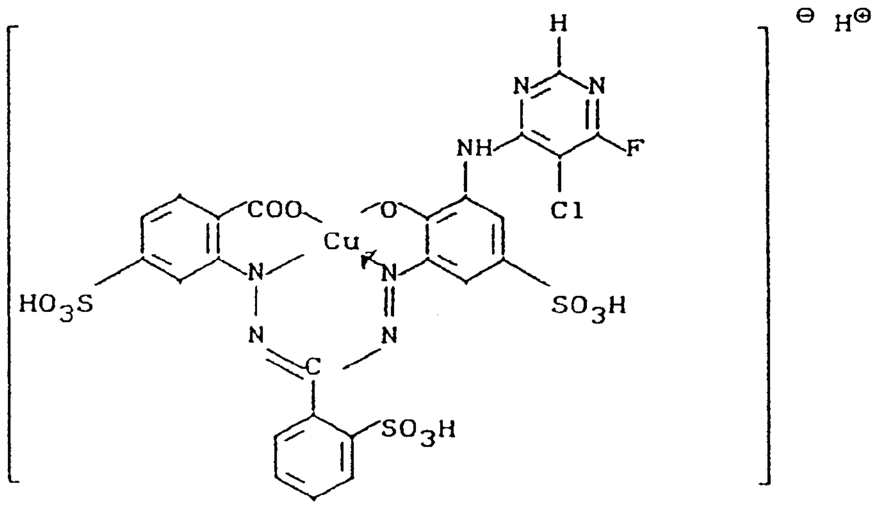

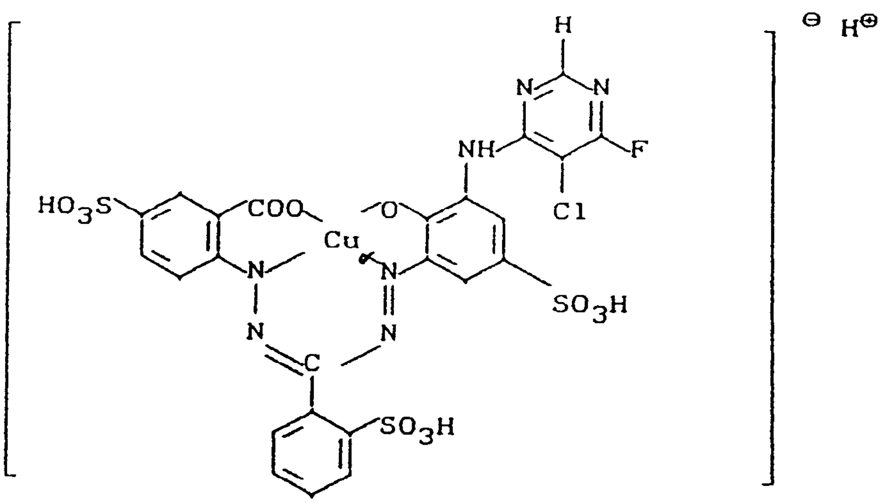

**4.** Utilisation des colorants suivant les revendications 1 à 3 pour la teinture et l'impression de matières contenant des groupes hydroxyle et des groupes amido.